# EUROPÄISCHE PATENTSCHRIFT

(11) **EP 1 216 788 B1**
(45) Veröffentlichungstag und Bekanntmachung des Hinweises auf die Patenterteilung: **08.10.2003**
(21) Anmeldenummer: 00128056.9
(22) Anmeldetag: 21.12.2000
(51) Int. Cl.: B23Q 1/54, B23Q 1/52

(54) **Werkstückhalteeinrichtung für eine Werkzeugmaschine, insbesondere eine Fräs- und/oder Bohrmaschine**
Workholding device for a machine tool, in particular a milling and/or drilling machine
Dispositif de serrage de pièces pour machine-outils, en particulier pour des foreuses ou fraiseuses

(43) Veröffentlichungstag der Anmeldung: 26.06.2002
(73) Patentinhaber: MASCHINENFABRIK BERTHOLD HERMLE AKTIENGESELLSCHAFT, D-78559 Gosheim (DE)
(72) Erfinder: Schwörer, Tobias, Dipl.-Ing. (FH), 78598 Königsheim (DE); Bernhard, Franz-Xaver, 78549 Spaichingen (DE)
(74) Vertreter: Vetter, Hans, Dipl.-Phys. Dr.

(56) Entgegenhaltungen:
- DE-A- 3 624 284
- DE-U- 7 101 882
- US-A- 4 075 753
- PATENT ABSTRACTS OF JAPAN vol. 008, no. 270 (M-344), 11. Dezember 1984 (1984-12-11) -& JP 59 142035 A (KITAMURA KIKAI KK), 15. August 1984 (1984-08-15)

## Beschreibung

Die Erfindung betrifft eine Werkstückhalteeinrichtung für eine Werkzeugmaschine, insbesondere eine Fräs- und/oder Bohrmaschine, mit wenigstens zwei drehbar an einer Halterung angeordneten Werkstücktischen, mit einem Antriebsmotor zum Drehantrieb der Werkstücktische und mit Messmitteln zur Erfassung der Drehbewegungen.

Bei einer aus der DE-GM 7101882 bekannten Werkstückhalteeinrichtung werden zwei drehbare Werkstücktische mittels eines einzigen Drehantriebs positioniert. Hierzu ist eine aufwendige Kupplungseinrichtung vorgesehen, bei der durch Heben und Senken der Werkstücktische derjenige Werkstücktisch eingekuppelt wird, der positioniert wird, während der andere Werkstücktisch entkoppelt ist.

Weiterhin ist aus der DE 3624284 C2 ein einziger, an einer Schwenkbrücke angeordneter, drehbar gelagerter und motorisch angetriebener Werkstücktisch bekannt, der durch den Lagerzapfen der Schwenkbrücke hindurch angetrieben wird. Da nur ein einziger schwenkbarer Werkstücktisch vorgesehen ist, werden die Probleme beim Antrieb von mehreren Werkstücktischen nicht behandelt.

Eine Aufgabe der vorliegenden Erfindung besteht darin, eine Werkstückhalteeinrichtung der eingangs genannten Gattung so zu verbessern, dass mehrere Werkstücktische mittels eines einzigen Antriebsmotors antreibbar sind und auf einfache, kostengünstige Weise individuell positioniert werden können.

Diese Aufgabe wird erfindungsgemäß dadurch gelöst, dass der Antriebsmotor alle Werkstücktische synchron über Antriebsmittel antreibt, dass jeder Werkstücktisch eigene Sensormittel zur Erfassung seiner Winkelposition besitzt und dass eine Positionsregeleinrichtung für die Werkstücktische vorgesehen ist, der als Positions-Istwerte jeweils alternativ die Signale derjenigen Sensormittel zuführbar sind, die dem jeweils für die Werkstückbearbeitung verwendeten Werkstücktisch zugeordnet sind.

Der Vorteil der erfindungsgemäßen Lösung besteht insbesondere darin, dass im Gegensatz zu der bekannten Anordnung keine Kupplungs- bzw. Entkupplungsmittel für die einzelnen Werkstücktische benötigt werden. Der oder die gerade nicht für die Werkstückbearbeitung erforderlichen Werkstücktische drehen sich zwar bei der Positionierung des aktiven Werkstücktisches im wesentlichen synchron mit, jedoch erfolgt die exakte Positionierung des jeweils für die Werkstückbearbeitung verwendeten Werkstücktisches ausschließlich mit Hilfe dessen eigener Sensormittel zur Erfassung seiner Drehbewegung. Soll ein anderer Werkstücktisch positioniert werden, so erfolgt lediglich eine Umschaltung auf dessen Sensormittel. Toleranzen in den Antriebsmitteln durch Spiel oder Dehnung wirken sich dadurch nicht auf die Positionsgenauigkeit aus. Sind auf mehreren Werkstücktischen Werkstücke aufgespannt, die nacheinander oder wechselnd bearbeitet werden sollen, so müssen jeweils lediglich die Sensormittel umgeschaltet werden, und es erfolgt keinerlei Umschaltung von mechanischen Komponenten. Trotz kostengünstiger und einfacher Auslegung können dadurch hohe Genauigkeiten erreicht werden. Erhöht sich die Zahl der drehbaren Werkstücktische an einer Halterung, so erhöht sich der Aufwand für die Positionierung nur unwesentlich, da lediglich für jeden zusätzlichen Werkstücktisch zusätzliche Sensormittel zur Erfassung seiner Drehbewegung erforderlich sind.

Durch die in den Unteransprüchen aufgeführten Maßnahmen sind vorteilhafte Weiterbildungen und Verbesserungen der im Anspruch 1 angegebenen Werkstückhalteeinrichtung möglich.

In einer bevorzugten Ausführung ist die als Schwenkbrücke ausgebildete Halterung zwischen Lagerwandungen oder Seitenwandungen der Werkzeugmaschine angeordnet und an diesen um eine insbesondere horizontale Achse schwenkbar gelagert und besitzt einen motorischen Schwenkantrieb. Hierdurch ist eine besonders vielseitige Bearbeitung gewährleistet.

Der Antriebsmotor für die Werkstücktische ist in vorteilhafter Weise an der gegenüber der Halterung entgegengesetzten Außenseite einer Lagerwandung oder Seitenwandung angeordnet, wobei sich die Antriebsmittel für die Werkstücktische durch einen Lagerzapfen oder eine Lagerwelle der Halterung hindurcherstrecken. Der Antriebsmotor ist somit durch die Lagerwandung oder Seitenwandung gegenüber der Bearbeitungsstelle geschützt angeordnet und kann nicht durch Bearbeitungsrückstände, Schmiermittel oder dergleichen erreicht werden.

Die Antriebsmittel besitzen in vorteilhafter Weise wenigstens eine Antriebswelle, über die wenigstens zwei Werkstücktische antreibbar sind, insbesondere mittels jeweils eines Zahn- oder Schneckengetriebes. Der mechanische Antrieb kann somit auf sehr einfache und kostengünstige Weise realisiert werden.

Die wenigstens eine Antriebswelle wird zweckmäßigerweise direkt oder indirekt durch eine im Lagerzapfen oder der Lagerwelle für die Halterungen drehbar gelagerte weitere Antriebswelle angetrieben. Diese weitere Antriebswelle wird außen vom Antriebsmotor angetrieben und treibt über die in der Halterung angeordnete Antriebswelle oder angeordneten Antriebswellen synchron die Werkstücktische an.

Die Werkstücktische sind in einer vorteilhaften Ausgestaltung als Schwenkrundtische ausgebildet.

In einer zweckmäßigen und einfachen Ausgestaltung sind die Signale der Sensormittel der einzelnen Werkstücktische über Umschalt- oder Auswahlmittel alternativ als Positions-Istwerte der Positionsregeleinrichtung zuführbar. Die Umschaltung der Positionsregelung für die verschiedenen Werkstücktische kann dadurch in einfachster Weise elektronisch bzw. elektrisch durchgeführt werden.

Ausführungsbeispiele der Erfindung sind in der Zeichnung dargestellt und in der nachfolgenden Beschreibung näher erläutert. Es zeigen:
- Fig. 1: eine Schwenkbrücke mit zwei motorisch drehbaren Werkstücktischen als Ausführungsbeispiel der Erfindung in einer Vertikalschnittdarstellung und
- Fig. 2: in der rechten Hälfte eine Draufsicht auf das in Fig. 1 dargestellte erste Ausführungsbeispiel und in der linken Hälfte eine Draufsicht auf ein weiteres Ausführungsbeispiel mit insgesamt vier Werkstücktischen.

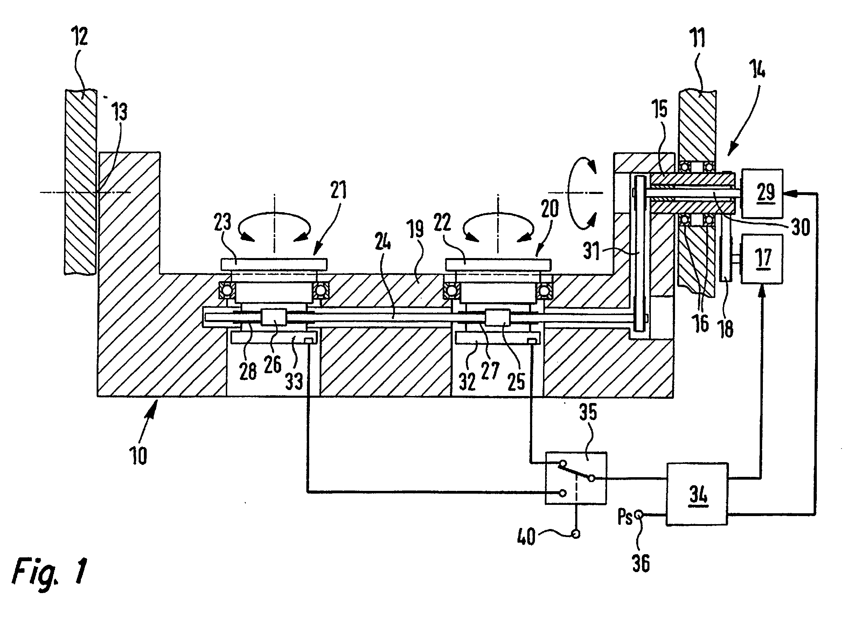

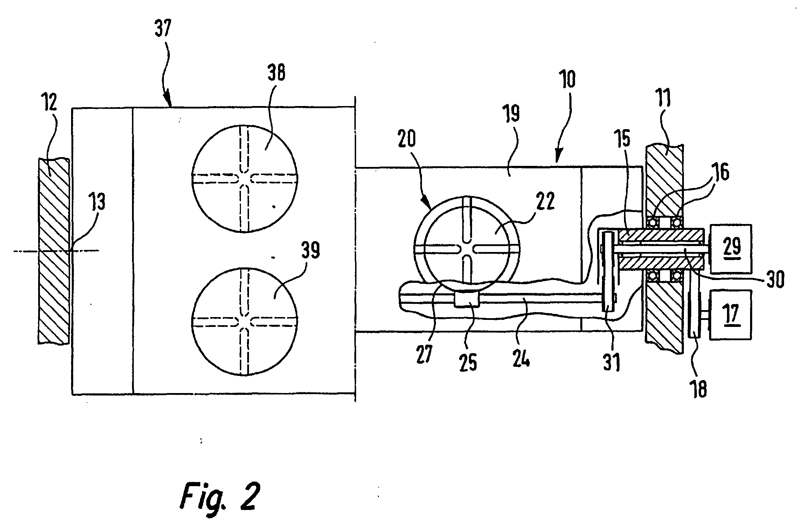

Bei dem in Fig. 1 und der rechten Hälfte von Fig. 2 dargestellten ersten Ausführungsbeispiel ist eine im wesentlichen U-förmige Schwenkbrücke 10 schwenkbar zwischen zwei Seitenwandungen 11, 12 einer im übrigen nicht dargestellten Werkzeugmaschine, beispielsweise einer Fräs- und/oder Bohrmaschine, an diesen Seitenwandungen 11, 12 schwenkbar gelagert. Die linke Lagerstelle 13 an der linken Seitenwandung 11 ist nur schematisch dargestellt. Die rechte Lagerstelle 14 an der rechten Seitenwandung 12 wird durch einen fest mit der Schwenkbrücke 10 verbundenen horizontalen Lagerhohlzapfen 15 gebildet, der in der Seitenwandung 12 mittels Lagern 16, beispielsweise Gleit- oder Wälzlagern, drehbar gelagert ist. Dieser Lagerhohlzapfen 15 wird von einem ersten Antriebsmotor 17 zur Positionierung der Schwenkbrücke 10 über einen Antriebsstrang 18 angetrieben, der als Zahnriemen oder Zahngetriebe ausgebildet sein kann.

Im horizontalen Bereich 19 der Schwenkbrücke 10 sind zwei als Schwenkrundtische 20, 21 ausgebildete Werkstücktische drehbar gelagert, wobei jeweils die Tischplatten 22, 23 über die Ebene der Schwenkbrücke 10 überstehen. Diese Schwenkrundtische 20, 21 werden durch eine gemeinsame Antriebswelle 24 angetrieben, die in der Längsrichtung der Schwenkbrücke 10 innerhalb dieser horizontal gelagert ist. Zum Positionsantrieb dienen jeweils auf der Antriebswelle 24 fixierte Antriebsschnecken 25, 26, die jeweils in einen Zahnkranz 27, 28 der Schwenkrundtische 20, 21 eingreifen. Ein zweiter Antriebsmotor 29 zum Positionsantrieb der beiden Schwenkrundtische 20, 21 treibt eine Motorwelle 30 an, die konzentrisch im Lagerhohlzapfen 15 drehbar gelagert ist. Diese Motorwelle 30 treibt die Antriebswelle 24 über einen beispielsweise als Zahnriemen ausgebildeten Antriebsstrang 31 an. Auch hier ist ein Antrieb über Zahnräder möglich.

Jeder der beiden Schwenkrundtische 20, 21 ist mit einer Positionsmesseinrichtung 32, 33 verbunden, um die jeweilige Winkelposition der Schwenkrundtische 20, 21 zu erfassen. Derartige Positionsmesseinrichtungen sind zum Beispiel aus der DE 19736986 A1 oder der DE 19804666 C1 bekannt.

Eine elektronische Positionsregeleinrichtung 34 dient zum geregelten Positionieren der Schwenkrundtische 20, 21 in die jeweiligen Bearbeitungspositionen. Hierzu werden die Signale der Positionsmesseinrichtungen 32, 33 alternativ über eine Umschaltvorrichtung 35 als Positions-Istwerte der Positionsregeleinrichtung 34 zugeführt. Die gewünschten Positions-Sollwerte Ps werden an einen Sollwerteingang 36 gelegt. Die Positionsregeleinrichtung 34 wirkt ausgangsseitig auf den zweiten Antriebsmotor 29 für die Schwenkrundtische 20, 21 ein.

Die Positionsregeleinrichtung 34 ist zusätzlich für die Positionsregelung der Schwenkbrücke 10 vorgesehen und wirkt daher ausgangsseitig auch auf den ersten Antriebsmotor 17 ein. Auf die Darstellung der Lageerfassung für die Schwenkbrücke 10 wurde zur Vereinfachung verzichtet, sie funktioniert in ähnlicher Weise wie die für die Schwenkrundtische 20, 21, wobei eine Umschaltvorrichtung hier entfällt. Selbstverständlich können auch mehrere separate Positionsregeleinrichtungen vorgesehen sein.

Beim dargestellten Ausführungsbeispiel werden mittels der Umschaltvorrichtung 35 die Positions-Istwerte desjenigen Schwenkrundtisches 20 bzw. 21 der Positionsregeleinrichtung 34 zugeführt, auf dem gerade ein Bearbeitungsvorgang stattfindet. Gemäß Fig. 1 ist dies der Schwenkrundtisch 20. Soll nun ein auf dem zweiten Schwenkrundtisch 21 eingespanntes Werkstück bearbeitet werden, so wird die Umschaltvorrichtung 35 betätigt, um nun die Positions-Istwerte des Schwenkrundtisches 21 der Positionsregeleinrichtung 34 zuführen zu können. Beim Wechsel der Bearbeitungsstelle durch Verfahren eines nicht dargestellten Bearbeitungskopfes von einem Schwenkrundtisch zum anderen braucht somit lediglich die Umschaltvorrichtung 35 betätigt werden.

Die Zahl der Schwenkrundtische kann selbstverständlich auch größer als zwei sein. In der linken Hälfte von Fig. 2 ist als weiteres Ausführungsbeispiel die Hälfte einer breiteren Schwenkbrücke 37 dargestellt, auf der vier Schwenkrundtische drehbar angeordnet sind. Von diesen sind wegen der hälftigen Darstellung nur zwei Schwenkrundtische 38, 39 erkennbar. Zum Antrieb dienen beispielsweise zwei parallele Antriebswellen 24 in der Schwenkbrücke 37, die gemeinsam durch die Motorwelle 30 über den Antriebsstrang 31 angetrieben werden. Auf diese Weise lässt sich die Zahl der Schwenkrundtische 38, 39 prinzipiell beliebig erhöhen. Unabhängig von ihrer Zahl werden sie jeweils gemeinsam und im wesentlichen synchron durch die Motorwelle 30 angetrieben, und jeder Schwenkrundtisch besitzt eine eigene Positionsmesseinrichtung. Über die entsprechend erweiterte Umschaltvorrichtung 35 werden dann jeweils die Positionssignale desjenigen Schwenkrundtisches der Positionsregeleinrichtung 34 zugeführt, die gerade aktiv ist, also auf der gerade ein Bearbeitungsvorgang stattfindet.

In einer einfacheren Ausführung können die Schwenkrundtische auch an einer nicht schwenkbaren Halteplatte angeordnet sein, die entweder starr mit der Werkzeugmaschine verbunden ist oder an dieser linear in einer oder mehreren Achsen verfahrbar ist.

Die Umschaltung der Umschaltvorrichtung 35 kann manuell oder automatisch erfolgen. Bei der automatischen Umschaltung wird in Abhängigkeit der jeweiligen Position des nicht dargestellten Bearbeitungskopfes ein entsprechendes Umschaltsignal an einen Umschalteingang 40 der Umschaltvorrichtung 35 gelegt, so dass immer derjenige Schwenkrundtisch aktiv geschaltet ist, über dem sich der Bearbeitungskopf befindet.

## Patentansprüche

1. Werkstückhalteeinrichtung für eine Werkzeugmaschine, insbesondere eine Fräs- und/oder Bohrmaschine, mit wenigstens zwei drehbar an einer Halterung (10; 37) angeordneten Werkstücktischen (20, 21; 38, 39), mit einem Antriebsmotor (29) zum Drehantrieb der Werkstücktische (20, 21; 38, 39) und mit Messmitteln zur Erfassung der Drehbewegungen, **dadurch gekennzeichnet, dass** der Antriebsmotor (29) alle Werkstücktische (20, 21; 38, 39) synchron über Antriebsmittel antreibt, **dass** jeder Werkstücktisch (20, 21; 38, 39) eigene Sensormittel (32, 33) zur Erfassung seiner Winkelposition besitzt und **dass** eine Positionsregeleinrichtung (34) für die Werkstücktische (20, 21; 38, 39) vorgesehen ist, der als Positions-Istwerte jeweils alternativ die Signale derjenigen Sensormittel (32, 33) zuführbar sind, die dem jeweils für die Werkstückbearbeitung verwendeten Werkstücktisch (20, 21; 38, 39) zugeordnet sind.

2. Werkstückhalteeinrichtung nach Anspruch 1, **dadurch gekennzeichnet, dass** die als Schwenkbrücke ausgebildete Halterung (10; 37) zwischen Lagerwandungen oder Seitenwandungen (11, 12) der Werkzeugmaschine angeordnet und an diesen um eine insbesondere horizontale Achse schwenkbar gelagert ist und einen motorischen Schwenkantrieb (17) besitzt.

3. Werkstückhalteeinrichtung nach Anspruch 2, **dadurch gekennzeichnet, dass** der Antriebsmotor (29) für die Werkstücktische (20, 21; 38, 39) an der gegenüber der Halterung (10; 37) entgegengesetzten Außenseite einer Lagerwandung oder Seitenwandung (11) angeordnet ist, wobei sich die Antriebsmittel für die Werkstücktische (20, 21; 38, 39) durch einen Lagerzapfen (15) oder eine Lagerwelle der Halterung (10; 37) hindurcherstrecken.

4. Werkstückhalteeinrichtung nach einem der vorhergehenden Ansprüche, **dadurch gekennzeichnet, dass** die Antriebsmittel wenigstens eine Antriebswelle (24) besitzen, über die wenigstens zwei Werkstücktische (20, 21) antreibbar sind, insbesondere mittels jeweils eines Zahn- oder Schneckengetriebes (25, 27).

5. Werkstückhalteeinrichtung nach Anspruch 3 und 4, **dadurch gekennzeichnet, dass** die wenigstens eine Antriebswelle (24) direkt oder indirekt durch eine im Lagerzapfen (15) oder in der Lagerwelle für die Halterung (10; 37) drehbar gelagerte weitere Antriebswelle (30) antreibbar ist, die insbesondere als Motorwelle des Antriebsmotors (29) ausgebildet ist.

6. Werkstückhalteeinrichtung nach einem der vorhergehenden Ansprüche, **dadurch gekennzeichnet, dass** die Werkstücktische (20, 21; 38, 39) als Schwenkrundtische ausgebildet sind.

7. Werkstückhalteeinrichtung nach einem der vorhergehenden Ansprüche, **dadurch gekennzeichnet, dass** die Signale der Sensormittel (32, 33) der einzelnen Werkstücktische (20, 21) über Umschalt- oder Auswahlmittel (35) alternativ als Positions-Istwerte der Positionsregeleinrichtung (34) zuführbar sind.

8. Werkstückhalteeinrichtung nach Anspruch 7, **dadurch gekennzeichnet, dass** die Umschalt- oder Auswahlmittel (35) in Abhängigkeit der Position eines Bearbeitungskopfes der Werkzeugmaschine derart automatisch betätigbar sind, dass jeweils die Sensormittel (32 bzw. 33) desjenigen Werkstücktisches (20 bzw. 21) mit der Positionsregeleinrichtung (34) aktiv verbunden sind, über dem oder in dessen Nähe sich der Bearbeitungskopf befindet.

## Claims

1. Workpiece holding fixture for a machine tool, in particular a milling and/or drilling machine, with at least two worktables (20, 21; 38, 39) arranged rotatably on a mount (10; 37), with a drive motor (29) providing the rotary drive of the worktables (20, 21; 38, 39), and with measuring means for detecting the rotary movements, **characterised in that** the drive motor (29) drives all worktables (20, 21; 38, 39) synchronously via drive means, that each worktable (20, 21; 38, 39) has independent sensor means (32, 33) for detecting its angular position, and that there is provided for the worktables (20, 21; 38, 39) a position control device (34) which may be supplied in each case alternatively with the signals of those sensor means (32, 33) respectively assigned to the worktable (20, 21; 38, 39) being used for workpiece machining.

2. Workpiece holding fixture according to claim 1, **characterised in that** the mount (10; 37) in the form of a swivel bridge is located between bearing walls or side walls (11, 12) of the machine tool and is pivotably mounted on them around an axis which is in particular horizontal, and has a powered swivel drive (17).

3. Workpiece holding fixture according to claim 2, **characterised in that** the drive motor (29) for the worktables (20, 21; 38, 39) is mounted on the outside of a bearing wall or side wall (11) opposite the mount (10; 37), while the drive means for the worktables (20, 21; 38, 39) extend through a bearing journal (15) or bearing shaft of the mount (10; 37).

4. Workpiece holding fixture according to any of the preceding claims, **characterised in that** the drive means have one or more drive shafts (24) through which at least two worktables (20, 21) may be driven, in particular in each case by means of a toothed or worm gearing (25, 27).

5. Workpiece holding fixture according to claims 3 and 4, **characterised in that** the drive shaft or shafts (24) may be driven directly or indirectly through a further drive shaft (30), in particular in the form of the motor shaft of the drive motor (29), which is pivotably mounted in the bearing journal (15) or bearing shaft for the mount (10; 37).

6. Workpiece holding fixture according to any of the preceding claims, **characterised in that** the worktables (20, 21; 38, 39) are in the form of swivelling rotary tables.

7. Workpiece holding fixture according to any of the preceding claims, **characterised in that** the signals of the sensor means (32, 33) of the individual worktables (20, 21) may be supplied alternatively as position actual values of the position control device (34) via changeover or selection means (35).

8. Workpiece holding fixture according to claim 7, **characterised in that**, depending on the position of a machining head of the machine tool, the changeover or selection means (35) may be automatically actuated in such a way that in each case the sensor means (32 or 33) of the worktable (20 or 21) concerned are actively linked to the position control device (34), above or in the vicinity of which the machining head is located.

## Revendications

1. Dispositif de maintien de pièces pour une machine-outil, en particulier une fraiseuse et/ou une perceuse, comportant au moins deux tables porte-pièces (20, 21 ; 38, 39) disposées tournantes sur une fixation (10 ; 37), comportant un moteur d'entraînement (29) pour l'entraînement en rotation des tables porte-pièces (20, 21 ; 38, 39) et comportant des moyens de mesure pour détecter les mouvements de rotation, **caractérisé en ce que** le moteur d'entraînement (29) entraîne toutes les tables porte-pièces (20, 21 ; 38, 39) de manière synchrone, par l'intermédiaire de moyens d'entraînement, **en ce que** chaque table porte-pièces (20, 21 ; 38, 39) possède ses propres moyens de détection (32, 33) pour détecter sa position angulaire et **en ce qu'**il est prévu pour les tables porte-pièces (20, 21 ; 38, 39) un dispositif de réglage de la position (34) auquel peuvent être envoyés, comme valeurs réelles de position, alternativement les signaux de ceux des moyens de détection (32, 33) qui sont affectés à la table porte-pièces (20, 21 ; 38, 39) utilisée dans chaque cas pour l'usinage de pièces.

2. Dispositif de maintien de pièces selon la revendication 1, **caractérisé en ce que** la fixation (10 ; 37) réalisée en tant que pont pivotant est disposée entre des parois de support ou des parois latérales (11, 12) de la machine-outil, et est montée pivotante sur celles-ci autour d'un axe en particulier horizontal, et possède un dispositif d'entraînement en pivotement (17) motorisé.

3. Dispositif de maintien de pièces selon la revendication 2, **caractérisé en ce que** le moteur d'entraînement (29) des tables porte-pièces (20, 21 ; 38, 39) est disposé sur le côté extérieur, opposé à la fixation (10 ; 37), d'une paroi de support ou paroi latérale (11), les moyens d'entraînement des tables porte-pièces (20, 21 ; 38, 39) s'étendant à travers un tourbillon (15) ou un arbre de support de la fixation (10 ; 37).

4. Dispositif de maintien de pièces selon l'une des revendications précédentes, **caractérisé en ce que** les moyens d'entraînement possèdent au moins un arbre d'entraînement (24) par lequel au moins deux tables porte-pièces (20, 21) peuvent être entraînées, en particulier au moyen d'une transmission à dentures ou une transmission à vis sans fin (25, 27) respective.

5. Dispositif de maintien de pièces selon les revendications 3 et 4, **caractérisé en ce que** le ou les arbres d'entraînement (24) peuvent être entraînés directement ou indirectement par un autre arbre d'entraînement (30) monté tournant dans le tourbillon (15) ou dans l'arbre de support de la fixation (10 ; 37), lequel est réalisé en particulier en tant qu'arbre moteur du moteur d'entraînement (29).

6. Dispositif de maintien de pièces selon l'une des revendications précédentes, **caractérisé en ce que** les tables porte-pièces (20, 21 ; 38, 39) sont réalisées sous la forme de tables circulaires pivotantes.

7. Dispositif de maintien de pièces selon l'une des revendications précédentes, **caractérisé en ce que** les signaux des moyens de détection (32, 33) peuvent être envoyés aux différentes tables porte-pièces (20, 21) par des moyens de commutation ou de sélection (35), alternativement, en tant que valeurs réelles de position du dispositif de réglage de position (34).

8. Dispositif de maintien de pièces selon la revendication 7, **caractérisé en ce que** les moyens de commutation ou de sélection (35) peuvent être actionnés automatiquement en fonction de la position d'une tête d'usinage de la machine-outil, de manière que les moyens de détection (32 ou 33) de la table porte-pièces (20 ou 21) respective soient reliés de manière active au dispositif de réglage de position (34) au-dessus duquel ou à proximité duquel se trouve la tête d'usinage.
